# EUROPEAN PATENT SPECIFICATION

(11) **EP 2 779 413 B1**
(45) Date of publication and mention of the grant of the patent: **07.07.2021**
(21) Application number: 14160034.6
(22) Date of filing: 14.03.2014
(51) Int. Cl.: B60L 50/10

(54) **Drive system and method for driving a vehicle**
Antriebsstrangsystem und Verfahren zum Antrieb eines Fahrzeugs
Système et procédé d'entraînement de véhicule

(30) Priority: 15.03.2013 CN 201310084413
(43) Date of publication of application: 17.09.2014
(73) Proprietor: General Electric Company, Schenectady, NY 12345 (US)
(72) Inventor: Zhou, Ronghui, 201203 Pudong (CN); Kang, Pengju, 201203 Pudong (CN); Shen, Xiangming, 201203 Pudong (CN); Lu, Xi, 201203 Pudong (CN); Li, Fei, 201203 Pudong (CN); Zhou, Jian, 201203 Pudong (CN); Qiu, Hai, 201203 Pudong (CN); Sun, Fengcheng, 201203 Pudong (CN)
(74) Representative: Dennemeyer & Associates S.A.

(56) References cited:
- EP-A1- 1 663 687
- WO-A1-2011/138308
- GB-A- 2 493 961
- US-A1- 2010 206 100
- US-A1- 2012 022 734

## Description

Embodiments of the invention relate generally to a drive system and a method, and more particularly relate to a drive system and a method for adjusting a traction torque to drive a vehicle while a vehicle load is changed.

Vehicles can be equipped with a multitude of loads including electrical loads, such as air conditioning systems, hydraulic pumps, and mechanical loads, such as power take-off (PTO) implements, for performing different functions. For example, agricultural or industrial vehicles, such as tractors, forklifts, can be equipped with a multitude of different working or planting implements, such as PTO implements, hydraulic pumps, for different agricultural or industrial working functions. US 2010/0206100 A1 describes a power-take-off (PTO) system with an electrical drive system electrically connected to an energy storage device. Further, a controller is described which senses a speed requirement or a torque requirement of a PTO shaft and determines a frequency of the controlled AC power based on these quantities. Currently, the traction of the vehicle is affected by the variation of the loads which may result in the speed variation of the vehicle. For example, an abrupt load variation may cause a rush-out problem during navigating or U-turning so as to affect the performance and safety of the vehicle. US2012022734 relates to a hybrid electric working vehicle (e.g. a farm tractor or construction machine) and a control method thereof. In particular, it is intended to have a fixed speed for a diesel engine.

It is desirable to provide a drive system and a method to address at least one of the above-mentioned problems. The invention is defined by a drive system according to claim 1 and a method according to claim 3.

In accordance with one embodiment disclosed herein, a drive system is provided. The drive system includes a control unit and a traction device. The control unit is configured to receive a load variation signal indicating a vehicle load is to be or being changed and generate a traction torque in response to the load variation signal. The traction device is coupled to the control unit and configured to drive a vehicle according to the traction torque.

In accordance with another embodiment disclosed herein, a method is provided. The method includes receiving a load variation signal indicating a vehicle load is to be or being changed. The method further includes generating a traction torque in response to the load variation signal. And the method further includes applying the traction torque to a traction device to drive a vehicle according to the traction torque.

In accordance with another embodiment disclosed herein, a drive system is provided. The drive system includes a traction device and a control unit. The traction device is configured to provide different traction torques to drive a vehicle. The control unit is configured to receive a load variation signal indicating that the vehicle is to be or being switched from a first load condition to a second load condition. The control unit is further configured to change a first traction torque generated corresponding to the first load condition to a second traction torque generated corresponding to the second load condition.

### DRAWINGS

These and other features and aspects of the present disclosure will become better understood when the following detailed description is read with reference to the accompanying drawings in which like characters represent like parts throughout the drawings, wherein:
FIG. 1 is a schematic diagram of a drive system for driving a vehicle in accordance with an embodiment;
FIG. 2 is a schematic diagram of the drive system in accordance with another embodiment; and
FIG. 3 is a flow chart of a method for driving the vehicle in accordance with an embodiment.

### DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a", and "an" do not denote a limitation of quantity, but rather denote the presence of at least one of the referenced items. The use of "including," "comprising" or "having" and variations thereof herein are meant to encompass the items listed thereafter and equivalents thereof as well as additional items. The terms "connected" and "coupled" are not restricted to physical or mechanical connections or couplings, and can include electrical connections or couplings, whether direct or indirect.

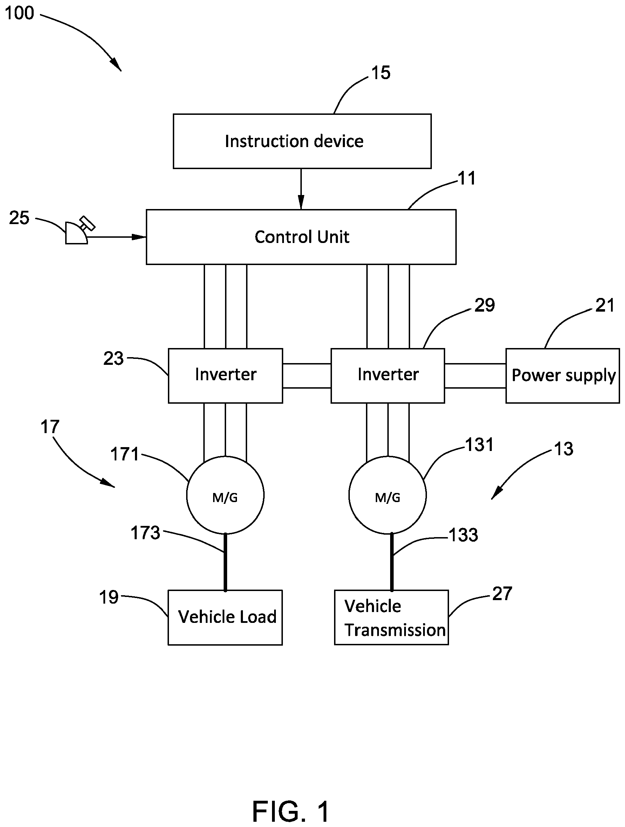

FIG. 1 illustrates a schematic diagram of a drive system 100 for a vehicle, particularly an agricultural or industrial vehicle, in accordance with an embodiment. The vehicle may be an electric vehicle, a hybrid vehicle or a vehicle powered by any other sources. The drive system 100 includes a control unit 11 and a traction device 13. In this embodiment, the drive system 100 further includes an instruction device 15 and a load drive device 17.

The load drive device 17 is configured to drive a vehicle load 19 which, in this embodiment, may be a power take-off (PTO) implement, for performing working functions, such as plowing and tilling. In some embodiments, the vehicle load 19 may include a hydraulic pump configured to perform lifting, an air conditioning device or any other devices configured to perform working functions. The vehicle load 19 may be an electrical load, such as the hydraulic pump and the air conditioning device, or a mechanical load, such as the PTO implement.

In this embodiment, the load drive device 17 includes a first electrical machine 171 configured to drive the vehicle load 19, and a PTO shaft 173 coupled to the first electrical machine 171 to carry the vehicle load 19. The first electrical machine 171 is capable of operating both as a motor and a generator. The first electrical machine 171, in this embodiment, may operate as a motor which is configured to drive the vehicle load 19 and powered by a power supply 21. The power supply 21, in this embodiment, may be a battery or any of other direct current (DC) sources to provide a DC. The power supply 21 provides power to the first electrical machine 171 through an inverter 23. In some embodiments, the power supply 21 may be an alternating current (AC) source or any other power sources. In some embodiments, the load drive device 17 may be other devices to drive the vehicle load, such as engine.

The instruction device 15 is configured to instruct the operation of the vehicle load 19 and provide a load variation signal to the control unit 11. The load variation signal is an instruction signal which instructs the vehicle load 19 to start to work, stop working or change working modes, and also a signal which indicates that the vehicle is to be or being switched from a first load condition to a second load condition. For example, the PTO implement is controlled to lift up or put down once the instruction device 15 is operated by a user, so that the load that the vehicle drives is decreased or increased. In some embodiments, the instruction device 15 may be an on/off switch, a pull bar, a button, an input panel or any other devices operated by users to input instruction signals. In some embodiments, two or more than two instruction devices 15 are provided to instruct different vehicle loads. The instruction devices 15 may generate different load variation signals for different vehicle loads.

The control unit 11 is configured to receive the load variation signal indicating the vehicle load 19 is to be or being changed. In this embodiment, the control unit 11 receives the load variation signal from the instruction device 15, so as to achieve the performance without increasing the hardware cost of the drive system 100. The control unit 11 is further configured to generate a traction torque in response to the load variation signal. In this embodiment, the control unit 11 generates a load variation torque in response to the load variation signal and further generates the traction torque based on the load variation torque and a vehicle command torque. The vehicle command torque, in this embodiment, may be input via an accelerator pedal 25, which indicates the amount of driver's pedal effort on the accelerator pedal 25. In some embodiments, the vehicle command torque is generated by the control unit 11 during automatic driving. The load variation torque indicates the variation amount of the torque supplied to the vehicle load 19 from the first load condition to the second load condition.

The traction torque is generated by adjusting the vehicle command torque with the load variation torque in order to compensate for the load change. More specifically, the traction torque is generated by increasing the vehicle command torque when the load variation torque has a positive value (i.e., the vehicle load is increased), or generated by decreasing the vehicle command torque when the load variation torque has a negative value (i.e., the vehicle load is decreased). The traction torque is determined and provided to the vehicle before or during the vehicle load 19 is changed so as to make sure the performance and the stability of the vehicle even if the load condition is changed. For example, it avoids the vehicle rushing out or pausing during traveling while the vehicle load 19 is changed. In this embodiment, multiple values of the load variation torque corresponding to the different load variation signals for different load variation condition are pre-detected or pre-estimated, which may be mapped in a mapping table. The corresponding value of the load variation torque may be looked out from the mapping table according to the load variation signal to calculate the traction torque, so as to increase the computation rate of the control unit 11 and the reaction rate of the drive system 100.

The control unit 11 is configured to determine a torque range having a lower limit value and an upper limit value in response to the load variation signal and to limit the traction torque within the torque range. The lower limit value indicates a lowest safeguard torque of the traction torque and the upper limit value indicates a highest safeguard torque of the traction torque. The torque range is determined based at least on the total load amount of the vehicle. The torque range, in this embodiment, is adjusted based on the load variation torque. In this embodiment, the control unit 11 determines the torque range based on the load variation torque and a pre-set range. Before the vehicle load 19 is changed, the traction torque is limited within the pre-set range which has a lower limit value and an upper limit value. The traction torque is limited within the torque range once the vehicle load 19 is changed, so as to make sure the safety of the vehicle. The torque range is determined by adjusting the pre-set range with the load variation torque. More specifically, the torque range is generated by extending the pre-set range when the load variation torque has a positive value (i.e., the vehicle load is increased), and by narrowing the pre-set range when the load variation torque has a negative value (i.e., the vehicle load is decreased). The lower limit value and the upper limit value of the torque range are adjusted based on the lower limit value and the upper limit value of the pre-set range and the load variation torque to adapt to the variation of the vehicle load 19.

The vehicle is working in the first load condition before the vehicle load 19 is changed. The control unit 11 generates a first traction torque corresponding to the first load condition to drive the vehicle in the first load condition. While the vehicle load 19 is changed, the vehicle is switched from the first load condition to the second load condition, and the control unit 11 changes the first traction torque to a second traction torque generated corresponding to the second load condition in response to the load variation signal. In one embodiment, the second traction torque may be determined based on the first traction torque and the load variation torque. The second traction torque is determined by adjusting the first traction torque with the load variation torque. In another embodiment, the second traction torque may be determined based on the vehicle command torque and the load variation torque as what mentioned previously.

The traction device 13 is coupled to the control unit 11 and configured to drive the vehicle according to the traction torque. The traction device 13 is configured to provide different traction torques, such as the first traction torque and the second traction torque, to drive the vehicle. The traction device 13 provides the first traction torque to drive the vehicle working in the first load condition before the vehicle load 19 is changed. The traction device 13 provides the second traction torque to drive the vehicle working in the second load condition when the vehicle load 19 is changed.

In this embodiment, the traction device 13 includes a second electrical machine 131 configured to drive the vehicle. The second electrical machine 131 is coupled via a drive draft 133 to a vehicle transmission 27 which is attached by wheels (not shown). The second electrical machine 131 is capable of operating both as a motor and a generator. The second electrical machine 131, in this example, may operate as a motor which is configured to drive the vehicle transmission 27 and powered by the power supply 21. The power supply 21 provides power to the second electrical machine 131 through an inverter 29. In some embodiments, the traction device 13 may include other devices to drive the vehicle transmission 27, such as engine.

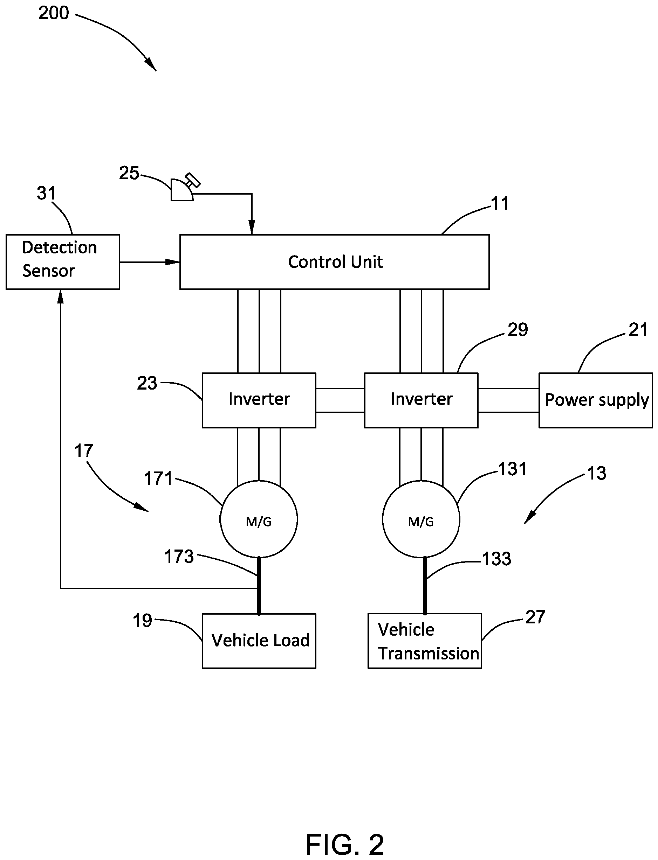

FIG. 2 illustrates a schematic diagram of a drive system 200 in accordance with another embodiment. The drive system 200 of the embodiment in FIG. 2 is similar to the drive system 100 of the embodiment in FIG. 1. Compared to the embodiment of FIG. 1, the drive system 200 illustrated in FIG. 2 includes one or more load detection sensors 31 configured to detect a load variation condition of the vehicle load 19 and generate the load variation signal to the control unit 11 according to the load variation condition. The load detection sensors 31 detect a first operation parameter, such as acceleration of the PTO shaft 173, current and voltage, and generate the load variation signal according to the first operation parameter. In some embodiments, the detection sensors 31 may be further configured to detect a second operation parameter, such as velocity of the PTO shaft 173, current and voltage, and generate an operation signal indicating the amount of the load variation according to the second operation parameter. In this embodiment, the control unit 11 may calculate the load variation torque based on the operation signal in response to the load variation signal. The load variation torque, in this embodiment, may be calculated accurately due to the load detection sensors 31. In some embodiments, the load detection sensors 31 may include an accelerometer, a gyroscope, a current sensor, a voltage sensor and/or any other detection devices.

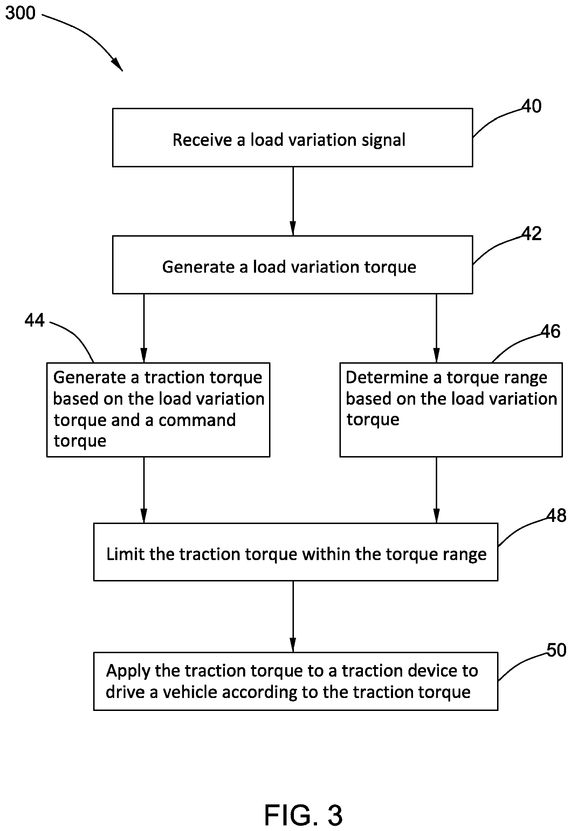

FIG. 3 illustrates a flow chart of a method 300 in accordance with an embodiment. While the actions of the method 300 are illustrated as functional blocks, the order of the blocks and the separation of the actions among the various blocks shown in FIG. 3 are not intended to be limited. For example, the blocks may be performed in a different order and an action associated with one block may be combined with one or more other blocks or may be sub-divided into a number of blocks.

At block 40, a load variation signal of the vehicle load is received. The load variation signal indicates the vehicle load is to be or being changed. In one embodiment, the load variation signal which instructs the operation of the vehicle load is generated via one or more instruction devices 15 shown in FIG. 1. In another embodiment, a load variation condition of the vehicle load is detected via one or more load detection sensors 31 shown in FIG. 2, and the load variation signal is generated via the load detection sensors 31 according to the load variation condition.

A traction torque is generated in response to the load variation signal that, in this embodiment, includes actions at blocks 42 and 44. At block 42, a load variation torque is generated in response to the load variation signal. The load variation signal may be generated through the look-up table method, estimation in real-time, or any other methods. At block 44, the traction torque is generated based on the load variation torque and a vehicle command torque. The vehicle command torque may be input via the accelerator pedal 25 by drivers or generated by the control unit 11 in automatic control condition. The traction torque is generated by adjusting the command torque with the load variation torque.

At block 46, a torque range having a lower limit value and an upper limit value is determined in response to the load variation signal. The torque range is adjusted based on the load variation torque. The torque range is determined by adjusting a pre-set range with the load variation torque. At block 48, the traction torque is limited within the torque range to make sure the safety of the vehicle. At block 50, the traction torque is applied to a traction device to drive a vehicle according to the traction torque.

## Claims

1. A drive system (100), comprising:
a control unit (11) configured to receive a load variation signal indicating a vehicle load (19) is to be or being changed and generate a traction torque in response to the load variation signal and a vehicle command torque;
one or more load detection sensors (31) configured to detect a load variation condition of the vehicle load (19) and generate the load variation signal to the control unit (11) according to the load variation condition; and
a traction device (13) coupled to the control unit (11) and configured to drive a vehicle according to the traction torque,
wherein the control unit is configured to:
generate a load variation torque in response to the load variation signal and generate the traction torque based on the load variation torque and the vehicle command torque;
decrease the vehicle command torque when the load variation signal indicates the vehicle load decreases and to increase the vehicle command torque when the load variation signal indicates the vehicle load increases;
**characterised in that** the control unit is further configured to:
determine a torque range having a lower limit value and an upper limit value in response to the load variation signal by extending a pre-set range when the load variation torque has a positive value and by narrowing the pre-set range when the load variation torque has a negative value; and
limit the traction torque within the torque range.

2. The drive system (100) of claim 1, wherein the drive system (100) comprises a first electrical machine configured to drive the vehicle load (19), and the traction device (13) comprises a second electrical machine configured to drive the vehicle.

3. A method, comprising:
receiving, by a control unit (11), a load variation signal indicating a vehicle load (19) is to be or being changed by detecting, via one or more load detection sensors (31), a load variation condition of the vehicle load (19) and generating the load variation signal to the control unit (11) according to the load variation condition;
generating, by the control unit (11), a traction torque in response to the load variation signal and a vehicle command torque;
applying the traction torque to a traction device (13) to drive a vehicle according to the traction torque;
decreasing the vehicle command torque when the load variation signal indicates the vehicle load decreases and increasing the vehicle command torque when the load variation signal indicates the vehicle load increases;
generating a load variation torque in response to the load variation signal;
generating the traction torque based on the load variation torque and a vehicle command torque;
**characterised by**
determining a torque range having a lower limit value and an upper limit value in response to the load variation signal by extending a pre-set range when the load variation torque has a positive value and by narrowing the pre-set range when the load variation torque has a negative value; and
limiting the traction torque within the torque range.

## Patentansprüche

1. Antriebsstrangsystem (100), umfassend:
ein Steuergerät (11), das konfiguriert ist, um ein Laständerungssignal zu empfangen, das angibt, dass eine Fahrzeuglast (19) geändert werden soll oder wird, und ein Zugdrehmoment als Reaktion auf das Laständerungssignal und ein Fahrzeugbefehlsdrehmoment zu erzeugen;
einen oder mehrere Lastdetektionssensoren (31), die konfiguriert sind, um einen Laständerungszustand der Fahrzeuglast (19) zu detektieren und das Laständerungssignal an das Steuergerät (11) gemäß dem Laständerungszustand zu erzeugen; und
eine Zugvorrichtung (13), die mit dem Steuergerät (11) gekoppelt und konfiguriert ist, um ein Fahrzeug gemäß dem Zugdrehmoment anzutreiben,
wobei das Steuergerät konfiguriert ist zum:
Erzeugen eines Laständerungsdrehmoments als Reaktion auf das Laständerungssignal und Erzeugen des Zugdrehmoments basierend auf dem Laständerungsdrehmoment und dem Fahrzeugbefehlsdrehmoment;
Verringern des Fahrzeugbefehlsdrehmoments, wenn das Laständerungssignal angibt, dass die Fahrzeuglast abnimmt, und Erhöhen des Fahrzeugbefehlsdrehmoments, wenn das Laständerungssignal angibt, dass die Fahrzeuglast zunimmt;
**dadurch gekennzeichnet, dass** das Steuergerät ferner konfiguriert ist zum:
Bestimmen eines Drehmomentbereichs, der einen unteren Grenzwert und einen oberen Grenzwert aufweist, als Reaktion auf das Laständerungssignal durch Erweitern eines voreingestellten Bereichs, wenn das Laständerungsdrehmoment einen positiven Wert aufweist, und durch Verengen des voreingestellten Bereichs, wenn das Laständerungsdrehmoment einen negativen Wert aufweist; und
Begrenzen des Zugdrehmoments innerhalb des Drehmomentbereichs.

2. Antriebsstrangsystem (100) nach Anspruch 1, wobei das Antriebsstrangsystem (100) eine erste elektrische Maschine umfasst, die zum Antreiben der Fahrzeuglast (19) konfiguriert ist, und die Zugvorrichtung (13) eine zweite elektrische Maschine umfasst, die zum Antreiben des Fahrzeugs konfiguriert ist.

3. Verfahren, umfassend:
Empfangen eines Laständerungssignals durch ein Steuergerät (11), das angibt, dass eine Fahrzeuglast (19) geändert werden soll oder wird, durch Detektieren eines Laständerungszustands der Fahrzeuglast (19) und Erzeugen des Laständerungssignals an das Steuergerät (11) gemäß dem Laständerungszustand mittels eines oder mehrerer Lastdetektionssensoren (31);
Erzeugen eines Zugdrehmoments durch das Steuergerät (11) als Reaktion auf das Laständerungssignal und ein Fahrzeugbefehlsdrehmoment;
Anlegen des Zugdrehmoments an eine Zugvorrichtung (13), um ein Fahrzeug gemäß dem Zugdrehmoment anzutreiben;
Verringern des Fahrzeugbefehlsdrehmoments, wenn das Laständerungssignal angibt, dass die Fahrzeuglast abnimmt, und Erhöhen des Fahrzeugbefehlsdrehmoments, wenn das Laständerungssignal angibt, dass die Fahrzeuglast zunimmt;
Erzeugen eines Laständerungsdrehmoments als Reaktion auf das Laständerungssignal;
Erzeugen des Zugdrehmoments basierend auf dem Laständerungsdrehmoment und einem Fahrzeugbefehlsdrehmoment;
**gekennzeichnet durch**
Bestimmen eines Drehmomentbereichs, der einen unteren Grenzwert und einen oberen Grenzwert aufweist, als Reaktion auf das Laständerungssignal durch Erweitern eines voreingestellten Bereichs, wenn das Laständerungsdrehmoment einen positiven Wert aufweist, und durch Verengen des voreingestellten Bereichs, wenn das Laständerungsdrehmoment einen negativen Wert aufweist; und
Begrenzen des Zugdrehmoments innerhalb des Drehmomentbereichs.

## Revendications

1. Système d'entraînement (100) comprenant :
une unité de commande (11) configurée pour recevoir un signal de variation de charge indiquant qu'une charge de véhicule (19) doit être modifiée ou est en cours de modification et générer un couple de traction en réponse au signal de variation de charge et un couple d'instruction de véhicule ;
un ou plusieurs capteurs de détection de charge (31) configurés pour détecter une condition de variation de charge de la charge de véhicule (19) et générer le signal de variation de charge pour l'unité de commande (11) en fonction de la condition de variation de charge ; et
un dispositif de traction (13) couplé à l'unité de commande (11) et configuré pour entraîner un véhicule en fonction du couple de traction,
dans lequel l'unité de commande est configurée pour :
générer un couple de variation de charge en réponse au signal de variation de charge et générer le couple de traction sur la base du couple de variation de charge et du couple d'instruction de véhicule ;
réduire le couple d'instruction de véhicule lorsque le signal de variation de charge indique que la charge de véhicule diminue et augmenter le couple d'instruction de véhicule lorsque le signal de variation de charge indique que la charge de véhicule augmente ;
**caractérisé en ce que** l'unité de commande est en outre configurée pour :
déterminer une plage de couple ayant une valeur limite inférieure et une valeur limite supérieure en réponse au signal de variation de charge par extension d'une plage prédéfinie lorsque le couple de variation de charge a une valeur positive et par réduction de la plage prédéfinie lorsque le couple de variation de charge a une valeur négative ; et
limiter le couple de traction dans la plage de couple.

2. Système d'entraînement (100) selon la revendication 1, dans lequel le système d'entraînement (100) comprend une première machine électrique conçue pour entraîner la charge de véhicule (19) et le dispositif de traction (13) comprend une seconde machine électrique conçue pour entraîner le véhicule.

3. Procédé comprenant :
la réception, par une unité de commande (11), d'un signal de variation de charge indiquant qu'une charge de véhicule (19) doit être modifiée ou est en cours de modification par détection, par l'intermédiaire d'un ou de plusieurs capteurs de détection de charge (31), d'une condition de variation de charge de la charge de véhicule (19) et la génération du signal de variation de charge pour l'unité de commande (11) en fonction de la condition de variation de charge ;
la génération, par l'unité de commande (11), d'un couple de traction en réponse au signal de variation de charge et d'un couple d'instruction de véhicule ;
l'application du couple de traction à un dispositif de traction (13) pour entraîner un véhicule en fonction du couple de traction ;
la réduction du couple d'instruction de véhicule lorsque le signal de variation de charge indique que la charge de véhicule diminue et l'augmentation du couple d'instruction de véhicule lorsque le signal de variation de charge indique que la charge de véhicule augmente ;
la génération d'un couple de variation de charge en réponse au signal de variation de charge ;
la génération du couple de traction sur la base du couple de variation de charge et d'un couple d'instruction de véhicule ;
**caractérisé par**
la détermination d'une plage de couple ayant une valeur limite inférieure et une valeur limite supérieure en réponse au signal de variation de charge par extension d'une plage prédéfinie lorsque le couple de variation de charge a une valeur positive et par réduction de la plage prédéfinie lorsque le couple de variation de charge a une valeur négative ; et
la limitation du couple de traction dans la plage de couple.
